# EUROPEAN PATENT APPLICATION

(11) **EP 4 617 815 A1**
(43) Date of publication of application: **17.09.2025**
(21) Application number: 24305372.5
(22) Date of filing: 12.03.2024
(51) Int. Cl.: G05D 1/243, B25J 9/00, B25J 9/16, G05D 1/246, G05D 1/667, G05D 109/10, G05D 111/10, G06N 20/10, G06V 20/00

(54) **A METHOD FOR CONDUCTING A KINEMATIC TASK WITHIN A GIVEN ENVIRONMENT**

(71) Applicant: TOYOTA JIDOSHA KABUSHIKI KAISHA, Aichi-ken 471-8571 (JP)
(72) Inventor: DESPINOY, Fabien, 1140 Brussels (BE); VAN LOOCK, Mark, 1140 Brussels (BE); MEIER, Sven, 1140 Brussels (BE); HONERKAMP, Daniel, D-79110 Freiburg i. Br. (DE); BUECHNER, Martin, 79110 Freiburg i. Br. (DE); WELSCHEHOLD, Tim, 79110 Freiburg i. Br. (DE); VALADA, Abhinav, 79110 Freiburg i. Br. (DE)
(74) Representative: Cabinet Beau de Loménie

(57) **Abstract**

A method (20) for conducting a kinematic task within a given environment, comprising obtaining (21) a representation of the environment identifying objects present in one or more areas of the environment, and performing (22) the kinematic task based on the identified objects and their positions in said one or more areas.

## Description

### 1. Field of the invention

The present invention relates to the field of robotics, notably service robotics and monitoring robotics. In particular, the invention relates to a method for conducting a kinematic task within a given environment.

### 2. Description of Related Art

Mobile automation object search refers to the process of autonomously or semi-autonomously locating specific objects within an environment using robotic systems and generally mobile automatons. The goal is to enable robots (or mobile automatons) to perceive, identify and locate objects of interest efficiently and accurately. This capability is essential for various applications in robotics, such as robotic manipulation, object retrieval, inventory management, and search operation. For instance, in household, robots equipped with cleaning tools and sensors can autonomously navigate indoor spaces, interact with their environment in order to identify and remove dirt or debris. Mobile automation object search tasks involve scanning floors and surfaces for areas requiring cleaning and then systematically cleaning those areas. In another example, in a warehouse, robots can be tasked with autonomously locating and retrieving specific items from shelves or storage bins. Mobile automation object search tasks involve navigating through aisles, identifying target items based on visual or RFID tags, and transporting them to a designated location for packaging or shipment.

In other words, mobile automation object search involves the robot autonomously exploring its surroundings, perceiving the environment using sensors such as cameras or depth sensors, and analyzing the acquired data to detect and localize target objects. This process relies on various techniques including computer vision, machine learning, planning algorithms and control algorithms. More specifically, computer vision enables the robot to perceive and interpret visual information from its surroundings. By processing images or video captured by onboard cameras or sensors, the robot can identify objects based on their shape, color, texture and other visual features. Then, machine learning algorithms, such as deep learning, are employed to train models that recognize and classify objects based on a predefined dataset of labeled examples. These trained models can then be deployed on embedded systems such as robotic platforms to facilitate accurate and efficient object detection and localization. Moreover, navigation algorithms are used to map the environment thanks to perception sensors. Internal representation is further employed to accurately localize the robot, establish its position as well as the different sensed objects in a common reference. Then, planning algorithms enable the robot to generate optimal paths and actions to achieve its objectives. For example, planning algorithms are used to determine the robot's trajectory and actions to navigate to the target object while avoiding obstacles. Finally, control algorithms generate commands to determine the different joint positions of the robot in order to execute synchronized and efficient motion.

An example of planning algorithm is large language model (LLM). Its deployment has garnered attention for its potential in plan generation. However, the application of LLMs has primarily focused on scenarios where the environment is fully observed or pre-explored. Accordingly, when confronted with large-scale scenes with numerous objects, LLM struggles to generate plans that are both executable and grounded in reality. Consequently, there is an increased risk of these models producing plans containing hallucinations or sequences that are in reality infeasible for execution.

Thus, despite the advancements in robotics by using large language models, addressing planning tasks in environment with fluctuating or initially uncertain configurations is crucial to improve the robustness and effectiveness of robotic systems.

### SUMMARY

The object of the invention is to at least substantially remedy the above-mentioned drawbacks. In this respect, the present invention relates to a method for conducting a kinematic task within a given environment, comprising obtaining a representation of the environment identifying objects present in one or more areas of the environment, and performing the kinematic task based on the identified objects and their positions in said one or more areas.

For conciseness, the method is referred to hereinafter as the task conducting method. Further, as used herein, for conciseness and unless the context indicates otherwise, "a", "an", and "the" are intended to refer to "at least one" or "each" and to include plural forms as well. Conversely, generic plural forms include the singular. Further, the term "one or more areas" comprises one area or a plurality of areas of the environment and can be replaced with "at least one area".

As indicated above, the aim of the invention is to plan task realization in an environment with fluctuating or initially uncertain configurations. In other words, such environment presents conditions that may change unexpectedly or wherein the initial setup is not fully known.

Thus, conducting a defined kinematic task for a robot (or a mobile automaton) in such an environment presents several complexities. In fact, the dynamic nature of the environment, including moving furniture, may lead to challenges in path planning and obstacle avoidance as the robot must constantly adapt these changes in real-time. The robot may encounter unexpected obstacles or encounter difficulties in identifying target objects.

In addition, the presence of multiple dynamic objects within the environment increases the difficulty of conducting a defined kinematic task. For example, open or closed doors can alter the robot's available paths and complicate the execution of the kinematic task.

Accordingly, by following the steps of the method (which may be a computer-implemented method), the robot can effectively navigate and operate within the environment despite its dynamic and uncertain nature.

As a matter of fact, obtaining a representation of the environment involves the robot acquiring data about its surroundings using various sensors such as cameras, Lidar or depth sensors. When processed, the acquired data provides a comprehensive representation of the environment including information about the objects present and identified within it. The information may include knowledge about each identified object such as its type and/or form and/or functionality. In essence, the information is not limited solely to identify the presence of objects; rather, it extends to understanding their specific features, attributes or purpose.

With the objects identified and their positions determined within the environment, the robot can then plan and execute the kinematic task. This involves generating one or a sequence of movements or actions that allow the robot to interact with the identified objects effectively. For example, if the task is object retrieval, the robot can navigate into the environment, plan the sequence of actions to retrieve said object, interact with its environment to reach the location of the target object based on its position and then use manipulation techniques to grasp it.

Optionally, the representation of the environment comprises a scene graph.

A scene graph is a data structure used in computer graphics to represent the hierarchical relationship between objects in a scene. The scene graph organizes graphical elements into a tree-like structure, where each node represents an object or a group of objects, and each edge represents a parent-child relationship between nodes. For example, rooms, furniture, and objects within an apartment can be represented as nodes within the scene graph, with relationships indicating how they are positioned relative to one another. In fact, by representing objects within the environment as nodes within the scene graph, that may be an open-vocabulary graph scene, spatial relationships between objects can be easily defined (e.g., a cup is contained within a cupboard). Thus, a scene graph is a powerful representation of the environment by modeling complex scenes (environment).

Of course, a person skilled in the art may opt for alternative representations of the environment depending on their specific requirements and preferences.

Optionally, the method comprises executing sequentially one or more actions aimed at conducting said kinematic task.

In other words, the method comprises performing a sequence of actions by interacting with the environment (such as objects), each aimed at accomplishing different aspects of the kinematic task. Each action is executed in a specific order, with the overall objective of successfully completing the task. For example, when the kinematic task is "fetching a book from a bookshelf' in an apartment, a first action would be to move to the bookshelf, then to identify the book and finally reach and retrieve the book.

Optionally, the one or more actions are selected among a predefined set of actions.

Accordingly, rather than executing any arbitrary actions, the method allows for selecting actions from a predefined list or set. In fact, using a predefined set of actions ensures consistency and reliability in task execution as these actions have been tested and/or optimized for effectiveness, minimizing the risk of errors or unexpected outcomes. In addition, by limiting the actions to a predefined set, the method reduces the risk of the robot selecting inappropriate of inefficient actions. Also, it should be noted that the predefined set depends on the kinematic capabilities of the mobile automaton which dictate the range of actions it can feasibly perform within its environment.

Optionally, the method comprises obtaining a classification of the one or more areas of the environment using a deep learning model.

Optionally, the deep learning model is a Large Language Model.

A Large Language Model is a type of artificial intelligence model designed to process and to understand human language. These models are trained on vast amounts of text data and are capable of generating human-like text based on the input they receive.

By utilizing the representation of the environment, e.g. the scene graph, as input data, the Large Language Model (LLM) can leverage its capabilities in natural language processing and deep learning.

More specifically, integrating both the representation of the environment, e.g. the scene graph, and a task query as inputs of the LLM enables the LLM to leverage the contextual information provided by the representation of the environment while addressing the requirements and constraints outlined in the task query. This synergy facilitates the generation of action(s) or sequence(s) of actions that are consistent with the environment context and conducive to achieving the objectives of the task query (for example: "fetching a book from a bookshelf").

Optionally, the classification is either an open-set or a closed-set classification.

Optionally, the representation of the environment is derived from a navigational graph that is constructed based on RGB-D frames of the environment.

RGB-D frames (images containing color and depth information) of the environment are captured with poses, indicating their spatial orientation within the environment. Additionally, semantic information about objects and their instances within the frames may also be accessed.

Points contained within the RGB-D frames may be transformed into a global coordinate frame, aligning them with a unified reference system. These points are then arranged on a 3D voxel grid manifold, forming a structured representation of the environment, noting that the 3D voxel grid helps to generate a two-dimensional bird's-eye-view occupancy map by inferring all occupied positions except for those considered as free space. In addition, proprioception of the robot (or mobile automaton) may complement the representation of the environment derived from RGB-D frames by providing data on the robot's internal state encompassing parameters such as joint position, velocity and force. This self-awareness enables the robot to understand its own spatial orientation and movement within its environment.

Accordingly, the navigational graph, which is a graphical representation of the environment that models the spatial relationships between different locations or areas within the environment, is generated from the occupancy map by converting discrete locations or areas within the map into nodes and establishing connections between them based on spatial relationships. Thus, such navigational graph provides a structured representation of the environment's navigable space which helps to generate a scene graph for example as an input to the LLM. Additionally, by integrating proprioceptive information with the navigational graph constructed from RGB-D frames, the robot gains a comprehensive understanding of both its surroundings and its own physical condition, facilitating precise and adaptive navigation and manipulation tasks.

Of course, a person skilled in the art would certainly adept at constructing a navigational graph based on RGB-D frames of the environment using alternative well-known techniques.

Optionally, the navigational graph is a Voronoi graph.

Optionally, the method comprises updating the representation of the environment based on newly discovered areas of the environment or on object dynamics in the environment.

As the problem being addressed is interactive, the representation of the environment may be updated to incorporate new information within the environment. This updating process occurs when novel areas of the environment are explored or when there are changes in the environment due to objects dynamics (rearranging the positions of objects, opening/closing doors, rotating an object, etc.).

The present invention further relates to a computer program set including instructions for executing the steps of the above-described method when said program set is executed by one computer.

This program set can use any programming language and take the form of source code, object code, or a code intermediate between source code and object code, such as a partially compiled form or any other desirable form.

The present invention further relates to an apparatus for conducting a kinematic task within a given environment, comprising:
- an obtaining module configured to obtain a representation of the environment identifying objects present in one or more areas of the environment; and
- a performing module configured to perform the kinematic task based on the identified objects and their positions in said one or more areas.

The apparatus referred to hereinafter as the task conducting apparatus, may be configured to carry out the above-mentioned task conducting method and may have part or all of the above-described features. For instance, at least one of said modules (one or more modules among these modules) is located on a cloud which typically refers to a network of remote servers accessed over the internet to store, manage and process data rather than on a local server or personal computer. Accordingly, one specific module or a plurality of modules of the task conducting apparatus is hosted or operated within the cloud rather than residing on a local server. It means that the functions or operation of the or these module(s) are carried out using cloud-based resources or services.

Of course, the task conducting apparatus may have the hardware structure of a computer which refers to the physical components and architecture that make up the computer system. These components include for example the central processing unit (CPU) and memory modules (such as RAM).

The present invention also relates to a mobile automaton comprising an apparatus as described above.

More precisely, a mobile automaton refers to a system that operates autonomously or semi-autonomously and moves within a defined environment while following a set of predefined rules or mechanism.

Optionally, the mobile automaton is a robot.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
- FIG. 1 is a block diagram of a task conducting apparatus according to an embodiment of the present invention; and
- FIG.2 is a flowchart of a task conducting method according to an embodiment of the present invention.

### DETAILED DESCRIPTION OF EMBODIMENTS

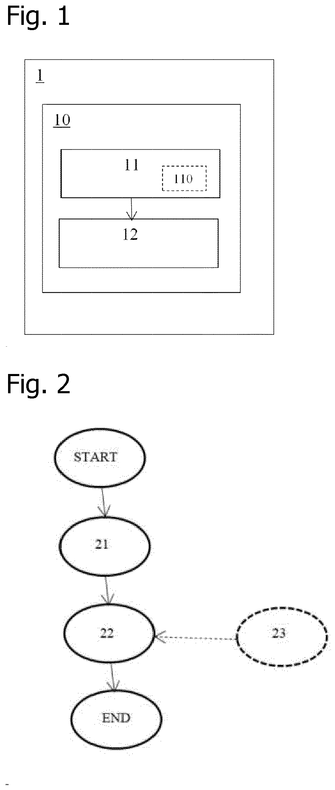

Figure 1 shows a block diagram of a task conducting apparatus 10 comprising an obtaining module 11 and a performing module 12 according to embodiments of the present invention. The task conducting apparatus 10 may be located inside or outside a mobile automaton 1 which may be, without limitation, an autonomous or semi-autonomous robot, or an autonomous or semi-autonomous vehicle. Such vehicle may be directed to an apparatus capable of transporting people or objects from one location to another, such as a car or a motorcycle, and may be categorized into different levels based on the extent of automation.

Alternatively or additionally, one module or a plurality of modules among the modules of the task conducting apparatus 10 may be hosted or operated within a cloud (extern server) rather than residing on a local server.

The task conducting apparatus 10 may be configured to conduct a kinematic task within a given environment. In fact, such environment has generally fluctuating or initially uncertain configurations and thus presents conditions that may change unexpectedly or wherein the initial setup is not fully known. Thus, conducting a defined kinematic task for a robot (or a mobile automaton) in such an environment present several complexities. The dynamic nature of the environment, including moving furniture, may lead to challenges in path planning and obstacle avoidance as the robot must constantly adapt these changes in real-time. The robot may encounter unexpected obstacles or encounter difficulties in identifying target objects.

Accordingly, the task conducting apparatus 10 is designed to permit to a robot (or a mobile automaton more broadly) to effectively navigate and operate within such environment despite its dynamic and uncertain nature.

It should be noted that the kinematic tasks include non-interactive mobile automation object search, interactive mobile automation object search, interactive mobile automation object search with receptacles, and abstract mobile automation search tasks.

For example, in a non-interactive mobile automation object search task, the objective is to locate objects that are visible and accessible without the need for interaction such as open doors. Conversely, interactive mobile automation object search task involve finding objects that are not immediately visible due to closed doors or obstructed views. The robot (and accordingly the task conducting apparatus 10) must interact with the environment, such as opening doors or moving obstacles, to reveal and locate the desired objects.

The interactive mobile automation object search with receptacles task introduces an additional layer of complexity by allowing objects to be concealed within receptacles, such as containers. The robot must search for and retrieve objects that may not be directly visible, requiring interacting with receptacles to access the items within.

Lastly, the abstract search task presents abstract search criteria such as finding objects based on their intended use. For example, the robot may be tasked within finding something suitable for cleaning or cutting.

The task conducting apparatus 10 may comprise an electronic circuit, a processor (shared, dedicated, or group), a combinational logic circuit, a memory that executes one or more software programs, and/or other suitable components that provide the described functionality. In other words, the task conducting apparatus 10 may be a computer device. The task conducting apparatus 10 may be connected to a memory, which may store data, e.g. at least one computer program, which, when executed, carries out the task conducting method according to the present invention.

For example, the memory can be a ROM (for "Read Only Memory"), a CD ROM, a microelectronic circuit ROM, or in the form of magnetic storage means, for example, a diskette (floppy disk), a flash disk, a SSD (for "Solid State Drive") or a hard disk.

Alternatively, the memory can be an integrated circuit in which the program is incorporated, the circuit being adapted to execute the task conducting method or to be used in its execution.

The obtaining module 11 is a module configured to obtain a representation of the environment identifying objects present in one or more areas of the environment. Such representation of the environment refers to a structured depiction of the surroundings that specifically highlights and categorizes the objects within those areas. This representation serves to capture and organize information about various entities, such as items, obstacles, or entities of interest, that are present within the areas of the environment.

More specifically, the representation of the environment corresponds to a map or model that conveys not only the spatial layout of the environment but also the types and locations of objects (entities, items) within it. Accordingly, this representation may include data from sensors, cameras, or other perception systems, processed and organized to provide a clear understanding of the object's presence and distribution across different areas of the environment.

The obtaining module 11 is thus tailored to gather data or sensory inputs from different sources, such as cameras, sensors, or other detection mechanisms, to generate such representation. For instance, the representation of the environment may comprise a scene graph that is a data structure used in computer graphics to represent the hierarchical relationship between objects in a scene (environment).

The scene graph organizes graphical elements into a tree-like structure, where each node represents an object or a group of objects, and each edge represents a parent-child relationship between nodes. For example, rooms, furniture, and objects within an apartment can be represented as nodes within the scene graph, with relationships indicating how they are positioned relative to one another. In fact, by representing objects within the environment as nodes within the scene graph, that may be an open-vocabulary graph scene, spatial relationships between objects can be easily defined (e.g., a cup is contained within a cupboard). Thus, a scene graph is a powerful representation of the environment by modeling complex scenes.

Of course, a person skilled in the art may opt for alternative representations of the environment depending on their specific requirements and preferences.

To obtain this representation of the environment, and more particularly a scene graph, the obtaining module 11 is configured to capture RGB-D frames and semantic data from these frames. The obtaining module 11 is then configured to generate a semantic 3D map capturing a detailed understanding of the environment. More particularly, a semantic 3D map is a comprehensive representation of the environment that incorporates both geometric information and semantic annotations such as "chair", "table", "wall", etc. Unlike traditional 3D maps that solely focus on geometric features such as shapes and surfaces, a semantic 3D map enriches this representation by associating each spatial element (object) with semantic labels or categories, thereby providing a deeper understanding of the environment's content and context.

The obtaining module 11 is then configured to extract various well-known occupancy maps that may be tailored for the bird's eye view perspective, enabling precise spatial data. Typically, an occupancy map is used to indicate the occupancy status of different areas within the environment. These maps are thus particularly useful for navigation, obstacle avoidance, and path planning algorithms.

The obtaining module 11 is then configured to construct a navigational graph, such as a Voronoi graph, which is a graphical representation of the environment that models the spatial relationships between different locations or areas within the environment. The navigational graph is generated from the occupancy maps by converting discrete locations or areas within the map into nodes and establishing connections between them based on spatial relationships. Thus, such navigational graph provides a structured representation of the environment's navigable space which helps to generate the scene graph.

The obtaining module 11 may be also configured to integrate proprioceptive information with the navigational graph as the proprioception makes the robot gain a comprehensive understanding of both its surroundings and its own physical condition, facilitating precise and adaptive navigation and manipulation tasks.

Of course, a skilled person in the art is able to choose other techniques for constructing a scene graph from images of the environment.

The obtaining module 11 may be implemented as software running on the task conducting apparatus 10 or may be implemented partially or fully as a hardware element of the task conducting apparatus 10.

Additionally, the performing module 11 may comprise a sub-module 110 that is configured to update the representation of the environment based on newly discovered areas of the environment or on object dynamics in the environment. Accordingly, the representation of the environment may be updated to incorporate new information within the environment. This update is performed by the obtaining module 11 when novel areas of the environment are explored or when there are changes in the environment due to objects dynamics (rearranging the positions of objects, opening/closing doors, rotating an object, etc.).

The performing module 12 is a module configured to perform the kinematic task based on the identified objects and their positions in said one or more areas. In other words, the performing module 12 is coupled with the obtaining module 11 in order to extract the representation of the environment and the information it provides, i.e. the identified objects and their positions in the one or more areas delimited in the environment.

To this end, the performing module 12 is configured to classify the one or more areas of the environment by processing the navigational graph using a deep learning model such as a Large Language Model (LLM) in order to obtain the scene graph.

By utilizing the navigational graph, e.g. the Voronoi graph, as input data of the performing module 12, the LLM can leverage its capabilities in natural language processing and deep learning to classify the areas of the environment based on their structural and semantic features, enabling a deeper understanding of the environment and its areas and thus generating the scene graph. For instance, when the environment is the inside of an apartment, the navigational graph contains information about various objects and their spatial relationships within the apartment. This navigational graph is then inputted into the LLM which then process the information and classifies different areas based on their characteristics: living room, kitchen and bedroom.

More specifically, to classify one specific area as the living room, the LLM identifies in the navigational graph a group containing a sofa, table and television. Based on the presence of these objects and their arrangement, the LLM classifies this area as the living room. Similarly for the kitchen, when another group in the scene graph contains objects such as a refrigerator and kitchen counter, the LLM recognizes these objects as typical elements found in a kitchen and classifies this area accordingly.

The LLM is able to perform an open-set classification or a closed-set classification of the area(s). In open-set classification, the LLM selects, in this example, the room category it deems most appropriate without constraints on the available categories. This technique enables the LLM to choose from a wide range of possible classifications. Conversely, in closed-set classification, the LLM has a predefined list of candidate room categories. By limiting the available choices to a predetermined set of categories, this technique imposes constraints of the classification of the area(s).

The performing module 12 is also configured to receive as an input a task query (for example: "fetching a book from a bookshelf") and the generated scene graph as a representation of the environment. The task query and the generated scene graph are then processed by the LLM integrated in the performing module 12.

Integrating both the representation of the environment, e.g. the scene graph, and the task query as inputs of the performing module 12, and more specifically the LLM, enables the LLM to leverage the contextual information provided by the representation of the environment while addressing the requirements and constraints outlined in the task query. This synergy facilitates the generation of action(s) or sequence(s) of actions that are consistent with the environment context and conducive to achieving the objectives of the task query. Additionally, it should be noted that the performing module 12 has a memory that may include policies to interact with the LLM. This comprises developing strategies that may be structured or unstructured for the LLM to effectively engage with the environment representation, guiding its decision making processes.

Accordingly, the performing module 12 is configured to generate a sequence of actions, selected among a predefined set of actions, and performing them, wherein each action is aimed at accomplishing different aspects of the kinematic task (task query). Each action is performed by the performing module 12 in a specific order, with the overall objective of successfully completing the task. For example, when the kinematic task is "fetching a book from a bookshelf' in an apartment, a first action generated and performed by the performing module 12 would be to interact with its environment in order to move to the bookshelf, then to identify the book and finally reach and retrieve the book.

The performing module 12 may be implemented as software running on the task conducting apparatus 10 or may be implemented partially or fully as a hardware element of the task conducting apparatus 10.

In particular, the task conducting apparatus 10 may comprise a program that includes both the obtaining module 11 and the performing module 12. Alternatively, the obtaining module 11 may be realized as an independent program (in particular, beside a program forming the performing module 12).

The steps carried out by the task conducting apparatus 10 are detailed hereinafter with respect to the corresponding task conducting method, an embodiment of which is illustrated in Fig. 2.

Fig. 2 is a flowchart of the task conducting method 20 according to an embodiment of the present invention. The task conducting method 20 is performed for conducting a kinematic task within the given environment. To this end, the task conducting method 20 comprises a step 21 performed by the obtaining module 11 to obtain a representation of the environment identifying objects present in one or more areas of the environment, i.e. a scene graph.

That is, the task conducting method 20 further comprises a step 22 performed by the performing module 12 to perform the kinematic task based on the identified objects and their positions in said one or more areas.

The task conducting method 20 optionally further comprises a step 23 of updating the representation of the environment based on newly discovered areas of the environment or on objects dynamics in the environment. Such step 23 can be performed by the sub-module 110. When the representation of the environment is updated, the step 22 is executed gain by the performing module 12 to perform the kinematic task based on updated identified objects and/or updated positions of the identified objects in said one or more areas.

Although the present disclosure refers to specific exemplary embodiments, modifications may be provided to these examples without departing from the general scope of the invention as defined by the claims. In particular, individual characteristics of the different illustrated/mentioned embodiments may be combined in additional embodiments. Therefore, the description and the drawings should be considered in an illustrative rather than in a restrictive sense.

## Claims

1. A method (20) for conducting a kinematic task within a given environment, comprising obtaining (21) a representation of the environment identifying objects present in one or more areas of the environment, and performing (22) the kinematic task based on the identified objects and their positions in said one or more areas.

2. The method (20) according to claim 1, wherein the representation of the environment comprises a scene graph.

3. The method (20) according to claim 1 or 2, comprising executing sequentially one or more actions aimed at conducting said kinematic task.

4. The method (20) according to claim 3, wherein the one or more actions are selected among a predefined set of actions.

5. The method (20) according to any of claims 1 to 4, comprising obtaining a classification of the one or more areas of the environment using a deep learning model.

6. The method (20) according to claim 5, wherein the deep learning model is a Large Language Model.

7. The method (20) according to claim 6, wherein the classification is either an open-set or a closed-set classification.

8. The method (20) according to any of claims 1 to 7, wherein the representation of the environment is derived from a navigational graph that is constructed based on RGB-D frames of the environment.

9. The method (20) according to claim 8, wherein the navigational graph is a Voronoi graph.

10. The method (20) according to any of claims 1 to 9, comprising updating (23) the representation of the environment based on newly discovered areas of the environment or on object dynamics in the environment.

11. A computer program set including instructions for executing the steps of the method (20) of any of claims 1 to 10 when said program set is executed by at least one computer.

12. An apparatus (10) for conducting a kinematic task within a given environment, comprising:
- an obtaining module (11) configured to obtain a representation of the environment identifying objects present in one or more areas of the environment; and
- a performing module (12) configured to perform the kinematic task based on the identified objects and their positions in said one or more areas.

13. A mobile automaton (1) comprising an apparatus (10) according to claim 12.

14. A mobile automaton (1) according to claim 13, which is a robot.

## Amended claims

### Amended claims in accordance with Rule 137(2) EPC.

1. A method (20) for conducting a kinematic task within a given environment, comprising obtaining (21) a representation of the environment identifying objects present in one or more areas of the environment, and performing (22) the kinematic task based on the identified objects and their positions in said one or more areas, the method being **characterized in that** it comprises obtaining an open-set classification of the one or more areas of the environment by using a Large Language Model.

2. The method (20) according to claim 1, wherein the representation of the environment comprises a scene graph.

3. The method (20) according to claim 1 or 2, comprising executing sequentially one or more actions aimed at conducting said kinematic task.

4. The method (20) according to claim 3, wherein the one or more actions are selected among a predefined set of actions.

5. The method (20) according to any of claims 1 to 4, wherein the representation of the environment is derived from a navigational graph that is constructed based on RGB-D frames of the environment.

6. The method (20) according to claim 5, wherein the navigational graph is a Voronoi graph.

7. The method (20) according to any of claims 1 to 6, comprising updating (23) the representation of the environment based on newly discovered areas of the environment or on object dynamics in the environment.

8. A computer program set including instructions for executing the steps of the method (20) of any of claims 1 to 7 when said program set is executed by at least one computer.

9. An apparatus (10) for conducting a kinematic task within a given environment, comprising:
- an obtaining module (11) configured to obtain a representation of the environment identifying objects present in one or more areas of the environment ; and
- a performing module (12) configured to perform the kinematic task based on the identified objects and their positions in said one or more areas,
the apparatus being **characterized in that** the one or more areas are classified using an open-set classification by using a Large Language Model.

10. A mobile automaton (1) comprising an apparatus (10) according to claim 9.

11. A mobile automaton (1) according to claim 10, which is a robot.
